# EUROPEAN PATENT SPECIFICATION

(11) **EP 4 131 649 B1**
(45) Date of publication and mention of the grant of the patent: **01.01.2025**
(21) Application number: 20928194.8
(22) Date of filing: 31.03.2020
(51) Int. Cl.: H01Q 1/50, H05K 9/00, H04M 1/02, H05K 5/04

(54) **COMMUNICATION DEVICE AND METHOD FOR MANUFACTURING COMMUNICATION DEVICE**
KOMMUNIKATIONSVORRICHTUNG UND VERFAHREN ZUR HERSTELLUNG EINER KOMMUNIKATIONSVORRICHTUNG
DISPOSITIF DE COMMUNICATION ET PROCÉDÉ DE FABRICATION D'UN DISPOSITIF DE COMMUNICATION

(43) Date of publication of application: 08.02.2023
(73) Proprietor: Sony Group Corporation, Tokyo 108-0075 (JP)
(72) Inventor: UTSUNOMIYA, Daiki, Tokyo 140-0002 (JP)
(74) Representative: D Young & Co LLP
(86) International application number: PCT/JP2020/014969
(87) International publication number: WO 2021/199365

(56) References cited:
- WO-A1-2012/117657
- JP-A- 2007 194 545
- JP-A- 2010 080 515
- JP-A- 2010 204 332
- JP-A- 2010 287 590
- JP-A- 2011 082 571
- JP-A- H04 119 700
- US-A1- 2019 264 318

## Description

### Field

The present disclosure relates to a communication device, and a manufacturing method of the communication device.

### Background

In a communication device including a cellular phone terminal, a technology of welding a plated sheet metal to a housing of the communication device in order to control an influence of unnecessary radiation has been known. The prior art includes JP H04 119700 A, JP 2011 082571 A, JP 2010 080515 A, JP 2010 287590 A, WO 2012/117657 A1, and US 2019/264318 A1.

### Citation List

### Patent Literature

Patent Literature 1: JP 2011-139283 A

### Summary

### Technical Problem

Welding a plated sheet metal to a housing increases a cost and complicates a manufacturing process. It is desired to control an influence of unnecessary radiation by an easy method at a low cost.

Thus, the present disclosure proposes a communication device and a manufacturing method of the communication device, with which the influence of the unnecessary radiation can be controlled at the low cost and by the easy method.

### Solution to Problem

The scope of the present disclosure is defined by the claims.

### Brief Description of Drawings

FIG. 1 is a view illustrating a schematic configuration of a communication device according to an embodiment.
FIG. 2 is a flowchart illustrating an example of a manufacturing method of the communication device according to the embodiment.
FIG. 3 is a view for describing chemical conversion treatment according to the embodiment.
FIG. 4 is a view for describing etching treatment according to the embodiment.
FIG. 5 is a view for describing a method of arranging metal foil according to the embodiment.
FIG. 6 is a view for describing a method of arranging a conductive member according to the embodiment.
FIG. 7 is a view for describing a method of arranging a display unit according to the embodiment.

### Description of Embodiments

In the following, embodiments of the present disclosure will be described in detail on the basis of the drawings. Note that in each of the following embodiments, overlapped description is omitted by assignment of the same reference sign to the same parts.

Note that the description will be made in the following order.
1. Communication device
2. Manufacturing method of the communication device
3. Modification example
4. Effect

### <1. Communication device>

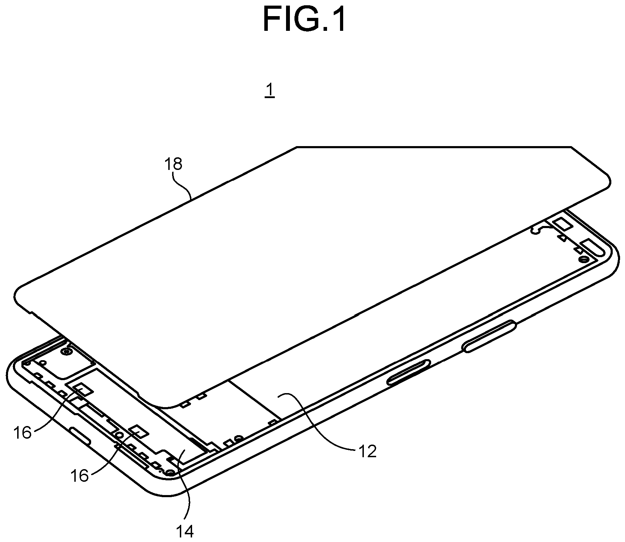

A configuration of a communication device according to an embodiment will be described with reference to FIG. 1. FIG. 1 is a view schematically illustrating a configuration of the communication device according to the embodiment.

As illustrated in FIG. 1, a communication device 1 includes a metal housing 12, metal foil 14, a conductive member 16, and a display unit 18. Note that a component that is not much related to the present disclosure is omitted in FIG. 1. The communication device 1 is a cellular phone, a smartphone, or the like. The communication device 1 is a communication device that performs communication using mmw, sub-6, Long Term Evolution (LTE), the Universal Mobile Telecommunications System (UMTS), the Global System for Mobile Communications (GSM) (registered trademark), or the like. The communication device 1 may be a communication device equipped with a wireless local area network (WLAN), Bluetooth (registered trademark), or the like.

The metal housing 12 is arranged in such a manner as to cover various parts including a circuit board. The metal housing 12 is electrically connected to the various parts including the circuit board. Chemical conversion treatment is performed on a whole region of a surface of the metal housing 12. Thus, a film for preventing corrosion is formed on the surface of the metal housing 12. The metal housing 12 has an exposed region in which etching treatment is performed on at least a part of the film formed on the surface and the metal housing 12 is exposed from the film. Specifically, the exposed region is formed at a contact at which the metal housing 12 and the display unit 18 are electrically connected. The metal housing 12 is formed of magnesium, for example. In this case, a film is formed over a whole region of magnesium, and magnesium is exposed in the exposed region. The metal housing 12 is formed of aluminum, for example. The metal housing 12 is formed of other metal, for example. In the present disclosure, the metal housing 12 may be referred to as a first metal member.

The metal foil 14 is arranged on the metal housing 12. The metal foil 14 is partially arranged on the metal housing 12. The metal foil 14 is arranged in such a manner as to cover at least the exposed region on the metal housing 12. The metal foil 14 may be arranged in a region that includes the exposed region and that is wider than the exposed region on the metal housing 12. The metal foil 14 is arranged in such a manner as to cover the whole surface of the metal housing 12. The metal foil 14 is pasted on the metal housing 12 with a conductive adhesive (not illustrated), for example. The metal foil 14 is, for example, copper foil. The metal foil 14 may be, for example, gold foil and silver foil. The metal foil 14 may be, for example, other metal foil capable of reducing a resistance value. The metal foil 14 prevents oxidation of the exposed region by covering the exposed region. In other words, the metal foil 14 prevents electric resistance of the metal housing 12 from being improved by the oxidation.

The conductive member 16 is arranged on the metal foil 14. The conductive member 16 electrically connects the metal foil 14 and the display unit 18. That is, the conductive member 16 electrically connects the metal housing 12 and the display unit 18. More specifically, the conductive member 16 electrically connects the display unit 18 and reference potential. The reference potential is, for example, ground, but the present disclosure is not limited thereto. The conductive member 16 is pasted on the metal foil 14 with a conductive double-sided tape, for example. The conductive member 16 may be pasted on the metal foil 14 with a conductive adhesive, for example. An area of the metal foil 14 is larger than a contact area between the conductive member 16 and the metal foil 14. The conductive member 16 can be realized by, for example, a known gasket in which a periphery of an elastic member (such as urethane) is covered with a nickel-plated member. Thus, the conductive member 16 improves conductivity between the metal foil 14 and the display unit 18.

The display unit 18 displays various images. The display unit 18 can be configured integrally with a touch panel, for example. The display unit 18 is, for example, a display such as an organic electro-luminescence (EL) display. A surface of the display unit 18 is a display that displays an image, and metal foil (such as copper foil) is provided on a back surface thereof. That is, the conductive member 16 electrically connects the metal foil 14 and the metal foil provided on the back surface of the display unit 18.

### <2. Manufacturing method of the communication device>

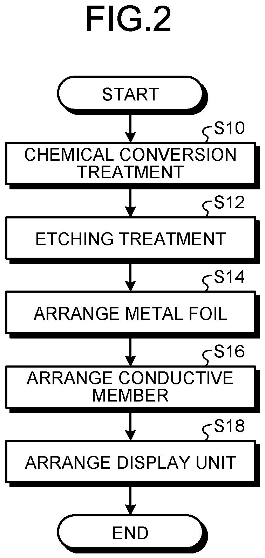

A manufacturing method of the communication device according to the embodiment will be described with reference to FIG. 2. FIG. 2 is a flowchart illustrating an example of the manufacturing method of the communication device according to the embodiment.

First, the chemical conversion treatment is performed on the surface of the metal housing 12 (Step S10). Specifically, in a case where the metal housing 12 is formed of magnesium, the chemical conversion treatment is performed by a known method using a chromic acid or a phosphoric acid.

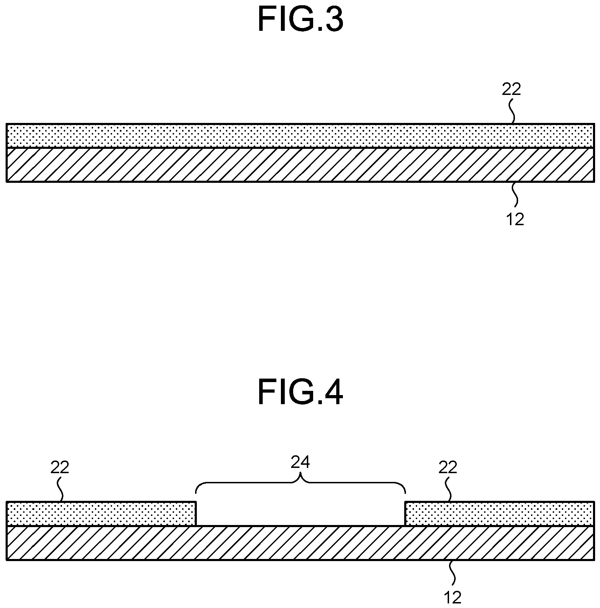

FIG. 3 is a view for describing the chemical conversion treatment according to the embodiment. As illustrated in FIG. 3, a film 22 is formed on the surface of the metal housing 12 by performance of the chemical conversion treatment on the surface of the metal housing 12. The film 22 improves corrosion resistance of the metal housing 12. That is, the film 22 prevents the oxidation of the metal housing 12.

Next, the etching treatment is performed on the film 22 formed on the surface of the metal housing 12 (Step S12). Specifically, laser etching treatment is performed on the surface of the metal housing 12 and the film 22 is partially removed.

FIG. 4 is a view for describing the etching treatment according to the embodiment. As illustrated in FIG. 4, the exposed region 24 where the surface of the metal housing 12 is exposed is formed by performance of the laser etching treatment on the film 22. A known method is used for the laser etching. Specifically, the exposed region 24 is formed at a portion where the metal housing 12 and the display unit 18 are electrically connected via the conductive member 16.

Next, the metal foil 14 is arranged on the surface of metal housing 12 (Step S14). Specifically, the metal foil 14 is arranged in such a manner as to cover the exposed region 24 formed by the laser etching treatment.

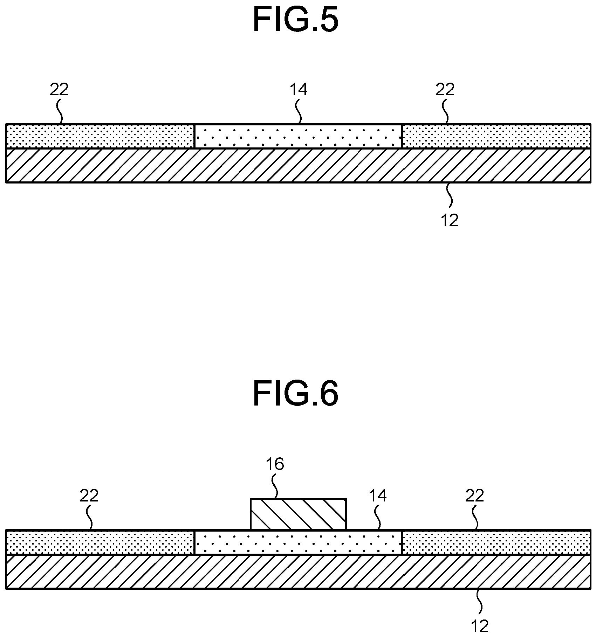

FIG. 5 is a view for describing a method of arranging the metal foil 14 according to the embodiment. As illustrated in FIG. 5, the metal foil 14 is arranged in such a manner as to cover at least the metal housing 12 the surface of which is exposed in the exposed region 24. For example, the metal foil 14 is pasted with a conductive adhesive in such a manner as to cover at least the metal housing 12 the surface of which is exposed in the exposed region 24. For example, the metal foil 14 may be pasted with the conductive adhesive in such a manner as to cover the metal housing 12, the surface of which is exposed in the exposed region 24, and the film 22. When the exposed metal housing 12 is covered with the metal foil 14, progress of the oxidation of the metal housing 12 can be controlled, and the electric resistance can be maintained in a low state.

Next, the conductive member 16 is arranged on the surface of the metal foil 14 (Step S16). Specifically, the conductive member 16 is arranged on the surface of the metal foil 14 in such a manner that the metal foil 14 and the conductive member 16 are electrically connected.

FIG. 6 is a view for describing a method of arranging the conductive member 16 according to the embodiment. As illustrated in FIG. 6, the conductive member 16 is arranged on the metal foil 14 with a conductive adhesive material, for example. The method of arranging the conductive member 16 on the metal foil 14 is not specifically limited as long as conduction between the metal foil 14 and the conductive member 16 can be secured.

Then, the display unit 18 is arranged (Step S18). Specifically, the display unit 18 is arranged in such a manner that the metal housing 12 and the display unit 18 are electrically connected.

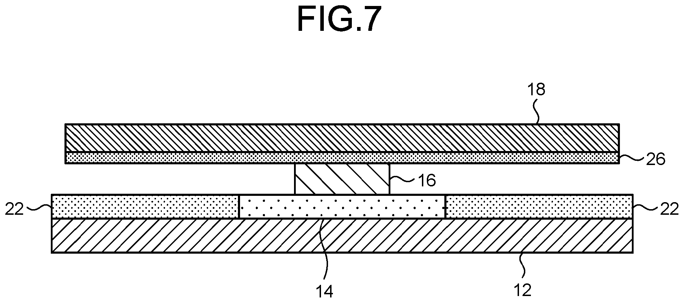

FIG. 7 is a view for describing a method of arranging the display unit 18 according to the embodiment. As illustrated in FIG. 7, metal foil 26 is provided on a surface on a side of the conductive member 16 (back surface) of the display unit 18. The metal foil 26 is, for example, copper foil. However, this is not a limitation. In the present disclosure, the metal foil 26 is a kind of a second metal member. The display unit 18 is arranged in such a manner that the metal foil 26 provided on the back surface is in contact with the surface of the conductive member 16. That is, the display unit 18 is connected to the metal housing 12 via the metal foil 14, the conductive member 16, and the metal foil 26. The metal housing 12 functions as ground. That is, with such a structure, the ground can be commonalized.

As described above, in the present embodiment, the metal foil 14 covers a connection portion where the metal housing 12 and the display unit 18 are electrically connected. As a result, oxidation of the connection portion between the metal housing 12 and the display unit 18 is controlled, and the electric resistance can be maintained in the low state. Thus, it is possible to prevent an influence of unnecessary radiation on other systems when the communication device 1 transmits radio waves.

### <3. Modification example>

Although an example of a case where the metal housing 12 and the display unit 18 are electrically connected has been described in the above-described embodiment, this is an example and the present disclosure is not limited thereto. For example, by electrically connecting an antenna (not illustrated) and a circuit board (not illustrated) with a similar configuration using the metal foil 14 and the conductive member 16 of the present disclosure, it is possible to secure ground of the antenna.

In addition, although the metal foil 14 and the conductive member 16 are used to connect the display unit 18 to the ground in the embodiment, the present disclosure is not limited thereto. For example, arbitrary parts including a circuit board of a communication device 1 may be connected by utilization of metal foil 14 and a conductive member 16 as necessary.

Furthermore, although the communication device 1 has been described as an example in the embodiment, the present disclosure is not limited thereto. In the present disclosure, arbitrary parts may be electrically connected with a configuration using metal foil 14 and a conductive member 16 in other electronic equipment. A tablet terminal, a notebook personal computer (PC), a portable game machine, and the like are examples of the other electronic equipment, but are not limitations.

### <4. Effect>

The communication device 1 according to the present disclosure includes: the first metal member 12 on which surface treatment is performed and in which the exposed region 24 is at least partially formed; the metal foil 14 arranged on the first metal member 12 in such a manner as to cover the exposed region 24; and the conductive member 16 that is arranged on the metal foil 14 and that electrically connects the first metal member 12 to the second metal member 26 via the metal foil 14.

As a result, the oxidation of the connection portion where the metal housing 12 and the display unit 18 are electrically connected is controlled, and the electric resistance can be maintained in the low state. Thus, generation of the unnecessary radiation can be controlled.

The surface treatment is chemical conversion treatment. Thus, the film 22 can be formed on the surface of the first metal member 12, and corrosion resistance of the first metal member 12 can be improved.

The first metal member 12 is a housing formed of magnesium. Thus, since the metal housing of the communication device 1 can be realized by magnesium, weight reduction of the communication device 1 can be realized.

The metal foil 14 is formed of metal having a lower resistance value than the first metal member 12. Thus, the electric resistance of the surface of the first metal member 12 can be reduced, and the unnecessary radiation can be controlled.

The metal foil 14 is copper foil. Thus, since the copper foil can be used to reduce the electric resistance of the surface of the first metal member 12, the unnecessary radiation can be easily controlled.

The metal foil 14 is provided in such a manner as to cover a whole region of the surface of the first metal member 12 including the exposed region 24. Thus, corrosion resistance of the whole region of the surface of the first metal member 12 can be improved.

The metal foil 14 is pasted on the first metal member 12 with a conductive adhesive. Thus, the metal foil 14 on the first metal member 12 can be easily arranged.

The area of the metal foil 14 is larger than the contact area between the metal foil 14 and the conductive member 16. Thus, it is possible to prevent oxidation of the first metal member 12 and to secure conductivity between the metal foil 14 and the conductive member 16.

The conductive member 16 is connected to the ground. Thus, a device or the like arranged on the conductive member 16 can be connected to the ground, and deterioration in performance of the device can be controlled.

The second metal member is a metal member provided on the display unit 18. Thus, since the first metal member 12 and the display unit 18 can be electrically connected by utilization of the metal foil 14 and the conductive member 16, it is possible to realize the communication device 1 in which control of generation of the unnecessary radiation is controlled.

The conductive member 16 is a gasket in which a surface of an elastic member is covered with metal. Thus, since a well-known member can be used as the conductive member 16, the unnecessary radiation can be easily controlled.

In the manufacturing method of the communication device 1 according to the present disclosure, the chemical conversion treatment is performed on the surface of the first metal member 12, the exposed region 24 is formed by performance of the etching treatment on a partial region of the first metal member 12, the metal foil 14 is arranged on the exposed region 24, and the conductive member 16 is arranged on the metal foil 14.

As a result, the oxidation of the connection portion where the metal housing 12 and the display unit 18 are electrically connected is controlled, and the electric resistance can be maintained in the low state. Thus, generation of the unnecessary radiation can be controlled.

In addition, the effects described in the present specification are merely illustrative or exemplary, and are not restrictive. That is, in addition to the above effects or instead of the above effects, the technology according to the present disclosure can exhibit a different effect obvious to those skilled in the art from the description of the present specification.

### Reference Signs List

1 COMMUNICATION DEVICE
12 METAL HOUSING
14, 26 METAL FOIL
16 CONDUCTIVE MEMBER
18 DISPLAY UNIT
22 FILM
24 EXPOSED REGION

## Claims

1. A communication device (1) comprising:
a first metal member (12) on which surface treatment is performed and in which an exposed region (24) is at least partially formed;
metal foil (14) arranged on the first metal member (12) in such a manner as to cover at least the exposed region (24); and
a conductive member (16) that is arranged on the metal foil (14) and that electrically connects the first metal member (12) to a second metal member (26) via the metal foil (14); and
wherein the surface treatment is chemical conversion treatment; and
wherein the metal foil (14) is provided in such a manner as to cover a whole region of a surface of the first metal member (12) including the exposed region (24).

2. The communication device according to claim 1, wherein
the first metal member is a housing formed of magnesium.

3. The communication device according to claim 1, wherein
the metal foil is formed of metal having a lower resistance value than the first metal member.

4. The communication device according to claim 3, wherein the metal foil is copper foil.

5. The communication device according to claim 1, wherein
the metal foil is pasted on the first metal member with a conductive adhesive.

6. The communication device according to claim 1, wherein
an area of the metal foil is larger than a contact area between the metal foil and the conductive member.

7. The communication device according to claim 1, wherein the conductive member is connected to ground.

8. The communication device according to claim 1, wherein
the second metal member is a metal member provided on a display unit.

9. The communication device according to claim 1, wherein
the conductive member is a gasket in which a surface of an elastic member is covered with metal.

10. A manufacturing method of a communication device (1), comprising:
performing chemical conversion treatment on a surface of a first metal member (12);
forming an exposed region (24) by performing etching treatment on a partial region of the first metal member (12) ;
arranging metal foil (14) on the exposed region (24); and
arranging a conductive member (16) on the metal foil;
wherein the metal foil (14) is provided in such a manner as to cover a whole region of a surface of the first metal member (12) including the exposed region (24).

## Patentansprüche

1. Kommunikationsvorrichtung (1), umfassend:
ein erstes Metallelement (12), an dem eine Oberflächenbehandlung durchgeführt wird und in dem mindestens teilweise ein freiliegender Bereich (24) ausgebildet wird;
eine Metallfolie (14), die an dem ersten Metallelement (12) derart angeordnet ist, dass sie mindestens den freiliegenden Bereich (24) bedeckt; und
ein leitfähiges Element (16), das an der Metallfolie (14) angeordnet ist und das das erste Metallelement (12) über die Metallfolie (14) mit einem zweiten Metallelement (26) elektrisch verbindet; und
wobei die Oberflächenbehandlung eine Behandlung einer chemischen Konversion ist; und
wobei die Metallfolie (14) derart bereitgestellt ist, dass sie einen gesamten Bereich einer Oberfläche des ersten Metallelements (12) einschließlich des freiliegenden Bereichs (24) bedeckt.

2. Kommunikationsvorrichtung nach Anspruch 1, wobei
das erste Metallelement ein Gehäuse ist, das aus Magnesium ausgebildet ist.

3. Kommunikationsvorrichtung nach Anspruch 1, wobei
die Metallfolie aus Metall ausgebildet ist, das einen niedrigeren Widerstandswert als das erste Metallelement aufweist.

4. Kommunikationsvorrichtung nach Anspruch 3, wobei
die Metallfolie eine Kupferfolie ist.

5. Kommunikationsvorrichtung nach Anspruch 1, wobei
die Metallfolie mit einem leitfähigen Klebstoff auf das erste Metallelement geklebt wird.

6. Kommunikationsvorrichtung nach Anspruch 1, wobei
eine Fläche der Metallfolie größer als eine Kontaktfläche zwischen der Metallfolie und dem leitfähigen Element ist.

7. Kommunikationsvorrichtung nach Anspruch 1, wobei
das leitfähige Element mit der Erde verbunden ist.

8. Kommunikationsvorrichtung nach Anspruch 1, wobei
das zweite Metallelement ein Metallelement ist, das an einer Anzeigeeinheit bereitgestellt ist.

9. Kommunikationsvorrichtung nach Anspruch 1, wobei
das leitfähige Element eine Dichtung ist, bei der eine Oberfläche eines elastischen Elements mit Metall bedeckt ist.

10. Fertigungsverfahren einer Kommunikationsvorrichtung (1), umfassend:
Durchführen einer Behandlung einer chemischen Konversion an einer Oberfläche eines ersten Metallelements (12);
Ausbilden eines freiliegenden Bereichs (24) durch Durchführen einer Ätzbehandlung an einem Teilbereich des ersten Metallelements (12);
Anordnen der Metallfolie (14) an dem freiliegenden Bereich (24); und
Anordnen eines leitfähigen Elements (16) an der Metallfolie;
wobei die Metallfolie (14) derart bereitgestellt ist, dass sie einen gesamten Bereich einer Oberfläche des ersten Metallelements (12) einschließlich des freiliegenden Bereichs (24) bedeckt.

## Revendications

1. Dispositif de communication (1) comprenant :
un premier élément métallique (12) sur lequel un traitement de surface est réalisé et dans lequel une région exposée (24) est au moins partiellement formée ;
une feuille métallique (14) agencée sur le premier élément métallique (12) de manière à couvrir au moins la région exposée (24) ; et
un élément conducteur (16) qui est agencé sur la feuille métallique (14) et qui connecte électriquement le premier élément métallique (12) à un second élément métallique (26) par l'intermédiaire de la feuille métallique (14) ; et
dans lequel le traitement de surface est un traitement de conversion chimique ; et
dans lequel la feuille métallique (14) est fournie de manière à couvrir une région entière d'une surface du premier élément métallique (12), y compris la région exposée (24).

2. Dispositif de communication selon la revendication 1, dans lequel
le premier élément métallique est un boîtier en magnésium.

3. Dispositif de communication selon la revendication 1, dans lequel
la feuille métallique est formée d'un métal présentant une valeur de résistance inférieure à celle du premier élément métallique.

4. Dispositif de communication selon la revendication 3, dans lequel
la feuille métallique est une feuille de cuivre.

5. Dispositif de communication selon la revendication 1, dans lequel
la feuille métallique est collée sur le premier élément métallique à l'aide d'un adhésif conducteur.

6. Dispositif de communication selon la revendication 1, dans lequel
une zone de la feuille métallique est plus grande qu'une zone de contact entre la feuille métallique et l'élément conducteur.

7. Dispositif de communication selon la revendication 1, dans lequel
l'élément conducteur est connecté à la terre.

8. Dispositif de communication selon la revendication 1, dans lequel
le second élément métallique est un élément métallique situé sur une unité d'affichage.

9. Dispositif de communication selon la revendication 1, dans lequel
l'élément conducteur est un joint dans lequel une surface d'un élément élastique est recouverte de métal.

10. Procédé de fabrication d'un dispositif de communication (1), comprenant :
la réalisation d'un traitement de conversion chimique sur une surface d'un premier élément métallique (12) ;
la formation d'une région exposée (24) en réalisant un traitement de gravure sur une région partielle du premier élément métallique (12) ;
l'agencement d'une feuille métallique (14) sur la région exposée (24) ; et
l'agencement d'un élément conducteur (16) sur la feuille métallique ;
dans lequel la feuille métallique (14) est fournie de manière à couvrir une région entière d'une surface du premier élément métallique (12), y compris la région exposée (24).
